# EUROPÄISCHE PATENTSCHRIFT

(11) **EP 3 453 923 B1**
(45) Veröffentlichungstag und Bekanntmachung des Hinweises auf die Patenterteilung: **21.10.2020**
(21) Anmeldenummer: 17189842.2
(22) Anmeldetag: 07.09.2017
(51) Int. Cl.: F16H 57/04, B60K 6/40

(54) **GETRIEBE FÜR EIN KRAFTFAHRZEUG**
TRANSMISSION FOR A MOTOR VEHICLE
BOÎTE DE VITESSES D'UN VÉHICULE AUTOMOBILE

(43) Veröffentlichungstag der Anmeldung: 13.03.2019
(73) Patentinhaber: ZF Friedrichshafen AG, 88046 Friedrichshafen (DE)
(72) Erfinder: Holst, Sven, 88074 Meckenbeuren (DE)
(74) Vertreter: ZF Friedrichshafen AG

(56) Entgegenhaltungen:
- EP-A1- 0 911 514
- WO-A1-2005/123434
- US-A1- 2004 154 846
- US-A1- 2011 076 165

## Beschreibung

Die Erfindung betrifft ein Getriebe für ein Kraftfahrzeug, mit einer elektrischen Maschine und einem Zugmitteltrieb, das ein erstes Zugmittelrad, das mit einer Rotorwelle der elektrischen Maschine drehfest verbunden ist, ein zweites Zugmittelrad, das mit einem Getriebebauteil drehfest verbindbar ist und das mittels eines Zugmittels mit dem ersten Zugmittelrad triebtechnisch verbunden ist, und einen Lagerzapfen zum Abstützen des ersten Zugmittelrads aufweist. Außerdem betrifft die Erfindung ein Kraftfahrzeug mit einem solchen Getriebe.

Aus dem Stand der Technik ist der Einsatz von einem Zugmitteltrieb in einem Kraftfahrzeuggetriebe bekannt. So ist beispielsweise aus der WO 2005 /123 434 A1 ein Kettentrieb bekannt, bei dem ein erstes Zugmittelrad mit einer Rotorwelle einer elektrischen Maschine drehfest verbunden ist. Ein zweites Zugmittelrad ist mittels einer Doppelkupplung mit einer Getriebeeingangswelle triebtechnisch verbindbar. Das erste Zugmittelrad ist mittels einer Kette mit dem zweiten Zugmittelrad triebtechnisch verbunden.

Die US 2004/0154846 A1 beschreibt eine Hinterrad-Antriebseinheit für ein Hybridfahrzeug. Darin ist in einem Gehäuse ein Kanal angeordnet, durch den Öl zu einer hohlen Hauptwelle geführt wird. Durch die hohle Hauptwelle gelangt das Öl zu einem Ölkanal einer Rotorwelle.

Damit die elektrische Maschine eine hohe Lebensdauer aufweist, muss diese beim Betrieb gekühlt werden. Dabei ist die Kühlung der elektrischen Maschine oftmals nur unter hohem konstruktiven Aufwand realisierbar.

Die Aufgabe der Erfindung besteht daher darin, ein Getriebe anzugeben, bei dem die Kühlung der elektrischen Maschine auf einfache Weise erfolgt.

Die Aufgabe wird durch das Getriebe der eingangs genannten Art mit den Merkmalen des Anspruchs 1 gelöst.

Das erfindungsgemäße Getriebe weist den Vorteil auf, dass die Ölleitung in dem Lagerzapfen angeordnet ist, der bei einem Zugmitteltrieb notwendig ist, um das erste Zugmittelrad abzustützen. Die Ölleitung kann somit kurz ausgebildet werden, weil das durch den Lagerzapfen gestützte erste Zugmittelrad mit der Rotorwelle der elektrischen Maschine drehfest verbunden ist und somit der Lagerzapfen in der Nähe der elektrischen Maschine angeordnet ist.

Unter einem Zugmittel kann ein Kraftübertragungsmittel verstanden werden, welches in einer Linearrichtung auf Zug belastet werden kann, um eine Kraft von dem ersten Zugmittelrad auf das zweite Zugmittelrad zu übertragen. Beispielsweise kann ein Zugmittel eine Kette sein, die Kettenglieder mit Öffnungen aufweist, in welche einzelne Formschlüsse der beiden Zugmittelräder eingreifen. Alternativ dazu kann das Zugmittel auch als Riemen ausgebildet sein, insbesondere als Zahnriemen.

Die Richtungsangaben "axial" und "radial" beziehen sich, sofern nichts Gegenteiliges angegeben ist, auf eine Mittelachse des Getriebes. Die Mittelachse kann beispielsweise der Drehachse einer Eingangswelle des Getriebes entsprechen.

Als drehfeste Verbindung wird eine Verbindung zwischen zwei Elementen verstanden, die derart ausgebildet und angeordnet ist, dass die beiden, miteinander wirkverbundenen Elemente stets die gleiche Drehzahl aufweisen. Dies ist nicht der Fall, wenn beispielsweise zwischen den beiden miteinander verbundenen Elementen ein Schaltelement angeordnet ist, das sich im geöffneten Zustand befindet. Die drehfeste Verbindung kann beispielsweise durch eine Steckverzahnung realisiert werden.

Die elektrische Maschine besteht zumindest aus einem Stator und einem drehbar gelagerten Rotor und ist in einem motorischen Betrieb dazu eingerichtet, elektrische Energie in mechanische Energie in Form von Drehzahl und Drehmoment zu wandeln, sowie in einem generatorischen Betrieb mechanische Energie in elektrische Energie in Form von Strom und Spannung zu wandeln.

Als Rotorwelle wird eine Welle bezeichnet, die mit dem Rotor der elektrischen Maschine drehfest verbunden ist. Dabei kann der Rotor auf der Rotorwelle angeordnet sein.

Bei einer besonderen Ausführung kann sich die Ölleitung in dem Lagerzapfen, insbesondere ausschließlich, in axialer Richtung erstrecken. Die Ölleitung kann sich durch den Lagerzapfen hindurch erstrecken. Dabei können ein Öleinlass der Ölleitung an einem axialen Ende des Lagerzapfens und ein Ölauslass der Ölleitung an einem anderen axialen Ende des Lagerzapfens angeordnet sein. Darüber hinaus kann die Ölleitung derart angeordnet und ausgebildet sein, dass Öl aus einer in einem Getriebegehäuse angeordneten weiteren Ölleitung mittels der Ölleitung zu der elektrischen Maschine zuführbar ist. Die weitere Ölleitung ist mit einer Ölhauptleitung fluidisch verbunden. Durch die Ölhauptleitung werden zusätzlich zu der elektrischen Maschine weitere Komponenten des Getriebes mit Öl versorgt. Als Getriebegehäuse wird ein Gehäuse verstanden, das sich beim Betrieb des Getriebes nicht dreht und ortsfest angeordnet ist.

Die Rotorwelle kann koaxial zu dem Lagerzapfen angeordnet sein. Darüber hinaus kann die Rotorwelle eine andere Ölleitung aufweisen, die mit der Ölleitung fluidisch verbunden ist. Die Rotorwelle kann außerdem eine Bohrung und/oder eine andere Bohrung aufweisen, durch die Öl zu wenigstens einem Bauteil der elektrischen Maschine zuführbar ist. Die Bohrung und/oder die andere Bohrung können in radialer Richtung verlaufen. Außerdem können die Bohrung und die andere Bohrung in axialer Richtung zueinander beanstandet angeordnet sein. Öl aus der anderen Ölleitung strömt durch die Bohrung und/oder die andere Bohrung in einen Innenraum der elektrischen Maschine. Von dort kann das Öl zu Bauteilen der elektrischen Maschine, wie beispielsweise zu Wickelköpfen der elektrischen Maschine, strömen und diese kühlen. Darüber hinaus ist es möglich, dass das Öl vom Innenraum der elektrischen Maschine zu Wellenlagern zugeführt wird, mittels denen die Rotorwelle gelagert wird.

Bei einer besonderen Ausführung kann das Getriebe ein Lager aufweisen, mittels dem sich das erste Zugmittelrad, insbesondere ausschließlich, in radialer Richtung an dem Lagerzapfen abstützt. Das Lager kann ein Nadellager sein. Das Lager kann derart ausgebildet sein, dass es eine axiale Bewegung des ersten Zugmittelrads zum Lagerzapfen zulässt.

Um bei einer axialen Bewegung des ersten Zugmittelrads relativ zum Lagerzapfen den Verschleiß gering zu halten, kann eine Anlauffläche für das erste Zugmittelrad vorhanden sein. Die Anlauffläche kann derart bearbeitet, insbesondere gehärtet, sein und/oder aus einem Material bestehen, dass bei einer Bewegung des ersten Zugmittelrads relativ zum Lagerzapfen der Verschleiß minimiert wird. Die Anlauffläche kann Bestandteil des Lagerzapfens sein.

Der Lagerzapfen kann einen, insbesondere umlaufenden, Abstützbereich aufweisen, mittels dem das erste Zugmittelrad in axialer Richtung abgestützt wird. Dabei kann die Anlauffläche Bestandteil des Abstützbereichs sein. Somit kann ein Verschleiß des ersten Zugmittelrads reduziert werden, wenn das erste Zugmittelrad an dem Abstützbereich anliegt. Der Abstützbereich kann in radialer Richtung von dem restlichen Bereich des Lagerzapfens vorstehen.

Das Getriebe kann eine Buchse aufweisen, die den Lagerzapfen, insbesondere einen Teil des Lagerzapfens, wenigstens teilweise, insbesondere vollständig, umschließt und die Anlauffläche aufweist. Bei diesem Fall liegt das Lager direkt auf der Buchse. Die Buchse kann einen, insbesondere umlaufenden, Bund zum axialen Abstützen des ersten Zugmittelrads aufweisen. Dabei kann die Anlauffläche Bestandteil des Bunds sein. Dies bietet den Vorteil, dass der Verschleiß des ersten Zugmittelrads und/oder des Lagers reduziert wird, wenn das erste Zugmittelrad am Bund anliegt.

Bei einer besonderen Ausführung kann eine weitere Bohrung vorgesehen sein, durch die Öl aus der Ölleitung zu dem Lager zugeführt wird. Durch die Ölzufuhr zum Lager kann eine Schmierung des Lagers auf einfache Weise erreicht werden. Die weitere Bohrung kann in dem Lagerzapfen angeordnet sein.

Alternativ kann die weitere Bohrung in einem Verbindungsmittel angeordnet sein. Ein Teil der Ölleitung kann sich durch das Verbindungsmittel, insbesondere in axialer Richtung, hindurch erstrecken. Dabei kann das Verbindungsmittel den Teil der Ölleitung, insbesondere in radialer Richtung, begrenzen. Das Verbindungsmittel kann mit dem Lagerzapfen lösbar verbindbar sein. Darüber hinaus kann der Lagerzapfen mittels des Verbindungsmittels mit dem Getriebegehäuse form- und/oder kraftschlüssig verbunden sein.

Alternativ kann die weitere Bohrung in einem Koppelstück angeordnet sein, das dem Verbindungsmittel strömungstechnisch nachgeschaltet ist. Das Koppelstück kann an einem Ende mit dem Verbindungsmittel verbunden sein und/oder einen anderen Teil der Ölleitung aufweisen. Der andere Teil der Ölleitung kann sich durch das Koppelstück in axialer Richtung hindurch erstrecken. Zudem kann das Koppelstück den anderen Teil der Ölleitung in radialer Richtung begrenzen. Natürlich sind auch Ausführungen möglich, bei denen das jeweilige Bauteil mehrere weitere Bohrungen aufweist. Die weiteren Bohrungen können entlang der Umfangsrichtung des jeweiligen Bauteils beabstandet zueinander angeordnet sein.

Der Zugmitteltrieb kann ein Ölleitelement aufweisen, das derart angeordnet und ausgebildet ist, dass es das durch das Lager geströmte Öl in Richtung zum Zugmittel umlenkt. Das Ölleitelement kann mit der Buchse, insbesondere einstückig, verbunden sein. Insbesondere kann das Ölleitelement an einem Ende des Bundes angeordnet und/oder mit dem Ende des Bundes drehfest verbunden sein. Alternativ kann das Ölleitelement an dem Lagerzapfen, insbesondere dem Abstützbereich des Lagerzapfens, angeordnet und/oder mit dem Lagerzapfen verbunden sein. Durch das Ölleitelement kann auf einfache Weise sichergestellt werden, dass das Zugmittel mit Öl beaufschlagt wird.

Das erste Zugmittelrad kann eine zusätzliche Bohrung, insbesondere mehrere zusätzliche Bohrungen, aufweisen, durch die das durch die weitere Bohrung geströmte Öl aus dem ersten Zugmittelrad ausströmt. Darüber hinaus kann das erste Zugmittelrad ein weiteres Ölleitelement aufweisen, das das durch die zusätzliche Bohrung geströmte Öl in Richtung zum Zugmittel umlenkt. Durch das weitere Ölleitelement wird sichergestellt, dass das Zugmittel von einer anderen Seite mit Öl beaufschlagt wird. Im Ergebnis wird durch das Ölleitelement und das weitere Ölleitelement erreicht, dass das Zugmittel von beiden axialen Seiten mit Öl beaufschlagt wird.

Die weitere Bohrung und/oder die zusätzliche Bohrung können stromaufwärts des Lagers angeordnet sein. Die zusätzliche Bohrung kann stromabwärts der weiteren Bohrung angeordnet sein. Dabei kann ein durch das erste Zugmittelrad umschlossener Aufnahmeraum vorhanden sein, in den das aus der weiteren Bohrung ausgeströmte Öl einströmt. Ausgehend von dem Aufnahmeraum kann ein Teil des im Aufnahmeraum befindlichen Öls zum Lager strömen und ein anderer Teil des Öls kann durch die zusätzliche Bohrung aus dem ersten Zugmittelrad ausströmen.

Bei einer besonderen Ausführung kann das erste Zugmittelrad einen Koppelabschnitt zum drehfesten Verbinden des ersten Zugmittelrads mit der Rotorwelle aufweisen, wobei der Koppelabschnitt einen Hohlraum umschließen kann. Der Lagerzapfen kann derart ausgebildet und angeordnet sein, dass er sich in den Hohlraum erstreckt. Alternativ kann das Verbindungsmittel derart ausgebildet und angeordnet sein, dass es sich in den Hohlraum erstreckt. Darüber hinaus kann das Koppelstück derart ausgebildet und angeordnet sein, dass es sich in den Hohlraum erstreckt. Der Hohlraum kann Bestandteil der anderen Ölleitung sein. Im Ergebnis wird durch die zuvor genannte Anordnung der Bauteile erreicht, dass das durch die Ölleitung strömende Öl unmittelbar in die andere Ölleitung einströmt.

Das Getriebebauteil kann eine Welle aufweisen, die mit dem zweiten Zugmittelrad drehfest verbunden ist. Alternativ kann das Getriebebauteil einen Kupplungsbestandteil einer Kupplung, insbesondere einer Doppelkupplung oder einer Dreifachkupplung, aufweisen, der mit dem zweiten Zugmittelrad drehfest verbunden, insbesondere verschweißt, ist. Der Kupplungsbestandteil kann ein Lamellenträger und/oder ein Kupplungsgehäuse sein. Beim Betrieb des Getriebes kann sich das Getriebebauteil und somit das zweite Zugmittelrad in axialer Richtung bewegen.

Die elektrische Maschine und das Getriebebauteil können radial versetzt zueinander angeordnet sein. Insbesondere kann eine Mittelachse der Rotorwelle in radialer Richtung versetzt zu einer Mittelachse der Welle des Getriebebauteils oder zu einer Mittelachse der Kupplung angeordnet sein.

Von besonderem Vorteil ist ein Kraftfahrzeug mit einem Getriebe. Das Getriebe kann ein Automatgetriebe sein, mittels dem mehrere Gänge mit unterschiedlicher Übersetzung zwischen einer Getriebeeingangswelle und einer Getriebeausgangswelle realisierbar sind.

In den Figuren ist der Erfindungsgegenstand schematisch dargestellt und wird anhand der Figuren nachfolgend beschrieben, wobei gleiche oder gleichwirkende Elemente zumeist mit denselben Bezugszeichen versehen sind. Dabei zeigen:
- Fig. 1: eine Schnittdarstellung des erfindungsgemäßen Getriebes mit dem erfindungsgemäßen Zugmitteltrieb gemäß einem ersten Ausführungsbeispiel,
- Fig. 2: eine vergrößerte Darstellung eines Teils des erfindungsgemäßen Zugmitteltriebs gemäß dem ersten Ausführungsbeispiel,
- Fig. 3: eine vergrößerte Darstellung eines Teils eines erfindungsgemäßen Zugmitteltriebs gemäß einem zweiten Ausführungsbeispiel,
- Fig. 4: eine vergrößerte Darstellung eines Teils eines erfindungsgemäßen Zugmitteltriebs gemäß einem dritten Ausführungsbeispiel,
- Fig. 5: eine vergrößerte Darstellung eines Teils eines erfindungsgemäßen Zugmitteltriebs gemäß einem vierten Ausführungsbeispiel,
- Fig. 6: ein Kraftfahrzeug mit dem erfindungsgemäßen Zugmitteltrieb.

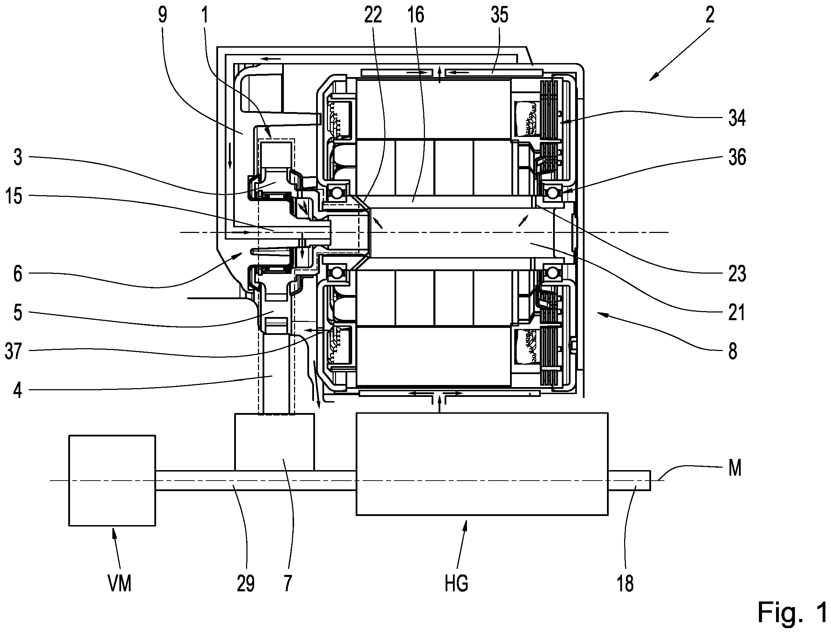

Figur 1 zeigt einen Teil eines Getriebes 2 mit einem Zugmitteltrieb 1. Der Zugmitteltrieb 1 weist ein erstes Zugmittelrad 3 auf, das mit einer Rotorwelle 16 einer elektrischen Maschine 8 drehfest verbunden ist und einen Lagerzapfen 6 zum Abstützen des ersten Zugmittelrads 3 auf. Das erste Zugmittelrad 3 ist relativ zum Lagerzapfen 6 axial beweglich angeordnet. Eine Ölleitung 15 erstreckt sich durch den Lagerzapfen 6 hindurch und ist mit einer weiteren Ölleitung 35 fluidisch verbunden. Die weitere Ölleitung 35 ist mit einer nicht dargestellten Ölhauptleitung fluidisch verbunden. Dabei kann das durch die Ölleitung 15 strömende Öl der elektrischen Maschine 8 zugeführt werden. Die Rotorwelle 16 weist eine andere Ölleitung 21 auf, die mit der Ölleitung 15 fluidisch verbunden ist. Der Lagerzapfen 6 erstreckt sich in axialer Richtung von einer Innenwand eines Getriebegehäuses 9. Das Getriebegehäuse 9 und der Lagerzapfen 6 sind einstückig ausgeführt.

Die Rotorwelle 16 weist außerdem eine Bohrung 22 und eine von der Bohrung 22 in axialer Richtung beabstandet angeordnete andere Bohrung 23 auf, durch die Öl aus der anderen Ölleitung 21 in einen Innenraum der elektrischen Maschine 8 strömen kann. Das in den Innenraum der elektrischen Maschine 8 geströmte Öl wird zu Bauteilen der elektrischen Maschine 8, wie beispielsweise zu Wickelköpfen der elektrischen Maschine 8 zugeführt. Darüber hinaus wird das in den Innenraum zugeführte Öl zu Wellenlagern zugeführt, die die Rotorwelle 16 lagern. Das in die elektrische Maschine 8 eingeströmte Öl strömt durch eine Auslassöffnung 37 aus dem Innenraum der elektrischen Maschine 8 aus. Der Ölstromverlauf zwischen der weiteren Ölleitung 35 und der Auslassöffnung 37 ist in Figur 1 durch mehrere Pfeile verdeutlicht.

Darüber hinaus weist der Zugmitteltrieb 1 ein zweites Zugmittelrad 4 auf, das mittels eines Zugmittels 5 in Form beispielsweise einer Kette mit dem ersten Zugmittelrad 3 triebtechnisch verbunden ist. Das zweite Zugmittelrad 4 ist mit einem zweiten Getriebebauteil 7 drehfest verbunden. Das zweite Getriebebauteil 7 weist einen in Figur 1 nicht näher dargestellten Kupplungsbestandteil auf, wie beispielsweise einen Lamellenträger, eine Doppelkupplung, eine Dreifachkupplung oder einen Drehmomentwandler, der mit dem zweiten Zugmittelrad 4 drehfest verbunden ist.

Das zweite Getriebebauteil 7 ist mit einer Getriebeeingangswelle 29 triebtechnisch verbunden. Die Getriebeeingangswelle 29 ist mit einer nicht zum Getriebe 2 gehörenden Kraftfahrzeugantriebseinheit VM, wie beispielsweise einem Verbrennungsmotor, triebtechnisch verbunden. Darüber hinaus ist die Getriebeeingangswelle 29 mit zumindest einem Bestandteil eines Hauptgetriebes HG triebtechnisch verbunden. Das Hauptgetriebe HG weist beispielsweise in Figur 1 nicht näher dargestellte Radsätze und Schaltelemente auf. Eine Getriebeausgangswelle 18 ist zumindest mit einem der Bestandteile des Hauptgetriebes HG triebtechnisch verbunden. Durch Schalten von einem oder mehreren der Schaltelementen des Hauptgetriebes HG lassen sich verschiedene Gänge mit jeweils unterschiedlichen Übersetzungen zwischen der Getriebeeingangswelle 29 und der Getriebeausgangswelle 18 realisieren.

Der in Figur 1 dargestellte Aufbau ist lediglich beispielhaft anzusehen. Zwischen Kraftfahrzeugantriebseinheit VM und dem zweiten Getriebebauteil kann zusätzlich eine Trennkupplung, eine Doppelkupplung, eine Dreifachkupplung oder ein Drehmomentwandler mit Überbrückungskupplung angeordnet sein. Die Getriebeausgangswelle 18 und die Getriebeeingangswelle 22 können am selben axialen Ende des Hauptgetriebes HG angeordnet sein. Getriebeausgangswelle 18 und Getriebeeingangswelle 22 können voneinander unterschiedliche Drehachsen aufweisen, wie beispielsweise bei einem Getriebe für einen Front-Quer-Antrieb oder Heck-Quer-Antrieb eines Kraftfahrzeugs. Der in Figur 1 dargestellte Aufbau dient daher nur als exemplarisches Beispiel, und schränkt den Aufbau des erfindungsgemäßen Zugmitteltriebs nicht ein.

Die elektrische Maschine 8 und das zweite Getriebebauteil 7 sind in radialer Richtung bezogen auf eine Mittelachse M des Getriebes 2 versetzt zueinander angeordnet.

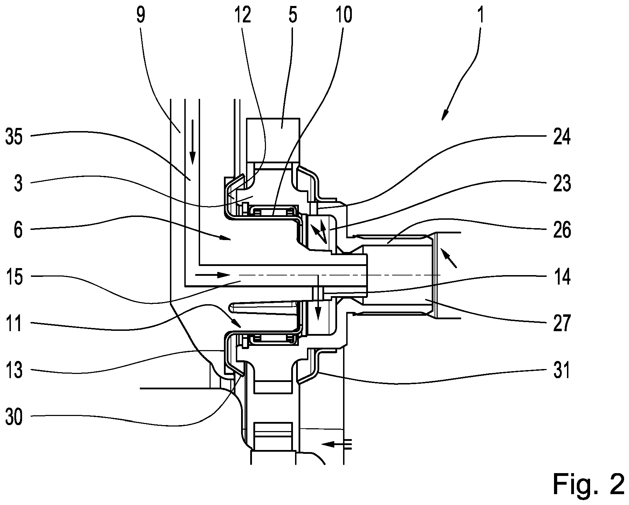

Figur 2 zeigt eine vergrößerte Darstellung eines Teils des in Figur 1 dargestellten Zugmitteltriebs 1. Der Zugmitteltrieb 1 weist ein Lager 10 auf, mittels dem sich das erste Zugmittelrad 3 an dem Lagerzapfen 6 abstützt. Das Lager 10 ist ein Nadellager, das eine axiale Bewegung des ersten Zugmittelrads 3 relativ zum Lagerzapfen 6 erlaubt.

Das Lager 10 liegt auf einer Buchse 11, die einen Teil des Lagerzapfens 6 umschließt und radial zwischen dem Lager 10 und dem Lagerzapfen 6 angeordnet ist. Die Buchse 11 weist an einem Ende einen umlaufenden, radial hervorstehenden Bund 13 auf, der als Anlauffläche 12 zum axialen Abstützen des ersten Zugmittelrads 3 dient.

Ein Ende der Ölleitung 15 ist an einem Ende mit der weiteren Ölleitung 35, die innerhalb des Getriebegehäuses 9 angeordnet ist, fluidisch verbunden. Die Ölleitung 15 mündet an ihrem anderen Ende in einem durch das erste Zugmittelrad 3, insbesondere durch einen Koppelabschnitt 26 des ersten Zugmittelrads 3 umschlossenen Hohlraum 27. Das erste Zugmittelrad 3 ist mittels des Koppelabschnitts 26 mit der in Figur 1 dargestellten Rotorwelle 16 drehfest verbunden.

Der Lagerzapfen 6 weist eine weitere Bohrung 14 auf, durch die, wie durch die Pfeile verdeutlicht ist, das in der Ölleitung 15 befindliche Öl in einen durch das erste Zugmittelrad 3 begrenzten Aufnahmeraum 23 strömt. Das in den Aufnahmeraum 23 eingeströmte Öl strömt anschließend durch das Lager 10 hindurch zum Bund 13. Der Bund 13 weist an einem Ende ein Ölleitelement 30 auf, welches dazu eingerichtet ist das durch das Lager 10 geströmte Öl in Richtung zum Zugmittel 5 umzulenken.

Das erste Zugmittelrad 3 weist außerdem eine zusätzliche Bohrung 24 auf, durch die ein Teil des in den Aufnahmeraum 23 geströmten Öls aus dem ersten Zugmittelrad 3 ausströmt. Das erste Zugmittelrad 3 weist ein weiteres Ölleitelement 31 auf, das derart ausgebildet und angeordnet ist, dass es das durch die zusätzliche Bohrung 24 ausgeströmte Öl in Richtung zum Zugmittel 5 umlenkt.

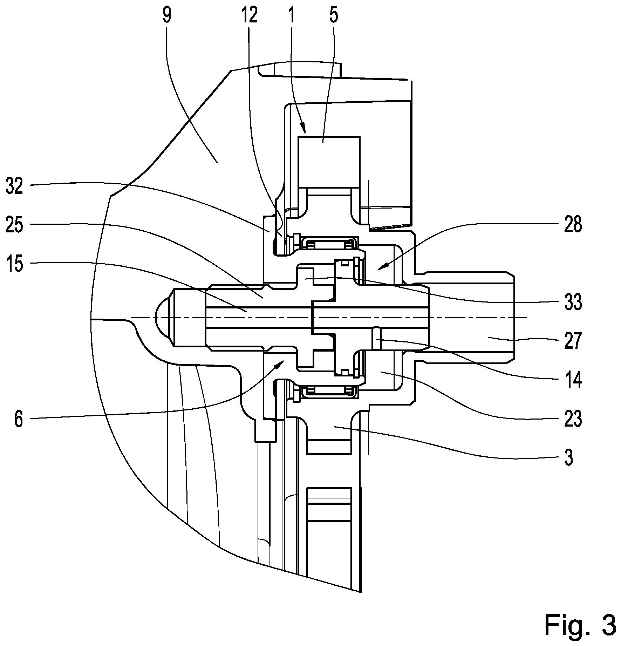

Figur 3 zeigt eine vergrößerte Darstellung eines Teils des Zugmitteltriebs 1 gemäß einem zweiten Ausführungsbeispiel. Der dargestellte Zugmitteltrieb 1 unterscheidet sich von dem in Figur 1 dargestellten Zugmitteltrieb 1 dadurch, dass der Lagerzapfen 6 und das Getriebegehäuse 9 nicht einstückig, sondern zweistückig ausgeführt sind.

So ist der Lagerzapfen 6 mittels eines Verbindungmittels 25 in Form einer Hohlschraube mit dem Getriebegehäuse 9 lösbar verbunden. Das Verbindungsmittel 25 weist an einem Ende ein Außengewinde auf, das mit einem Innengewinde des Getriebegehäuses 9 in Eingriff ist. Darüber hinaus weist das Verbindungsmittel 25 einen umlaufenden Vorsprung 33 auf, der im zusammengebauten Zustand des Zugmitteltriebs 1 den Lagerzapfen 6 gegen das Getriebegehäuse 9 drückt. Das Verbindungsmittel 25 weist einen Teil der Ölleitung 15 auf.

Ein weiterer Unterschied besteht darin, dass im Ausführungsbeispiel gemäß Figur 3 ein Koppelstück 28 vorhanden ist. Das Koppelstück 28 weist die Bohrung 14 und einen anderen Teil der Ölleitung 15 auf. Dabei ist ein Ende des Koppelstücks 28 mit dem Verbindungsmittel 25 verbunden und ist stromabwärts des Verbindungsmittels 25 angeordnet. Ein anderes Ende des Koppelstücks 28 ragt in den Hohlraum 27 hinein. Insbesondere ist das Koppelstück 28 derart angeordnet und ausgebildet, dass der andere Teil der Ölleitung 15 mit dem Hohlraum 27 fluidisch verbunden ist. Durch das Koppelstück 28 wird verhindert, dass das gesamte Öl aus dem Verbindungsmittel 25 in den Aufnahmeraum 23 strömt. Das Koppelstück 28, das Verbindungsmittel 25 und der Lagerzapfen 6 sind koaxial zueinander angeordnet. Die weitere Ölleitung 35 ist in Figur 3 nicht dargestellt.

Ein weiterer Unterschied besteht darin, dass der Zugmitteltrieb 1 keine Buchse 11 aufweist. Dies bedeutet, dass die Anlauffläche 12 Bestandteil des Lagerzapfens 6 ist. Dabei weist der Lagerzapfen 6 einen Abstützbereich 32 zum axialen Abstützen des ersten Zugmittelrads 3 auf.

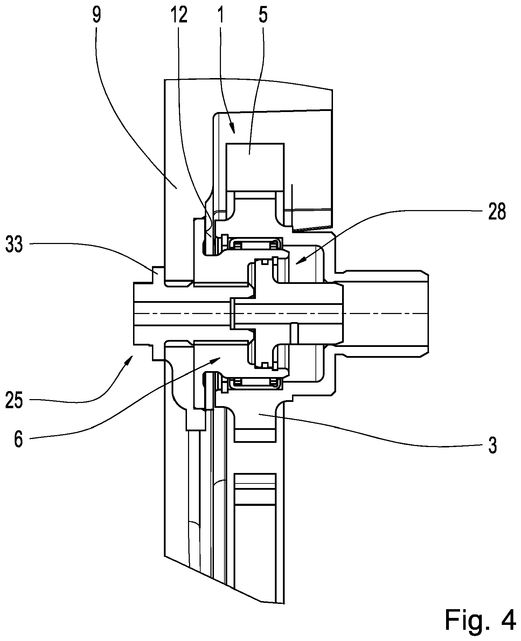

Figur 4 zeigt eine vergrößerte Darstellung eines Teils des Zugmitteltriebs 1 gemäß einem dritten Ausführungsbeispiel. Der dargestellte Zugmitteltrieb 1 unterscheidet sich von dem in Figur 3 dargestellten Zugmitteltrieb 1 in der Ausbildung des Verbindungsmittels 25, insbesondere in der Verbindung des Verbindungmittels 25 mit dem Getriebegehäuse 9 und dem Lagerzapfen 6.

So wird das in Figur 4 dargestellte Verbindungsmittel 25 mittels einer Schraubverbindung mit dem Lagerzapfen 6 verbunden. Der Vorsprung 33 des Verbindungsmittels 25 liegt beim zusammengebauten Zustand des Zugmitteltriebs 1 an dem Getriebegehäuse 9 an. Die Ölleitung 15 ist mit einer nicht dargestellten weiteren Ölleitung 35 verbunden, wobei die weitere Ölleitung 35 nicht im Getriebegehäuse 9 angeordnet ist.

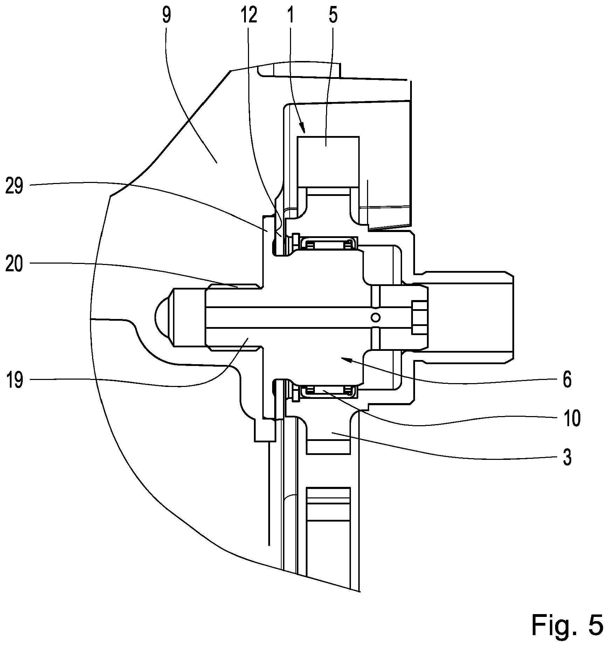

Figur 5 zeigt eine vergrößerte Darstellung eines Teils des Zugmitteltriebs 1 gemäß einem fünften Ausführungsbeispiel. Der dargestellte Zugmitteltrieb 1 unterscheidet sich von dem in Figur 1 dargestellten Zugmitteltrieb 1 dadurch, dass der Lagerzapfen 6 und das Getriebegehäuse 9 nicht einstückig, sondern zweistückig ausgeführt sind.

So kann der Lagerzapfen 6 mittels eines Befestigungsabschnitts 19 mit einem anderen Befestigungsabschnitt 20 des Getriebegehäuses 9 wieder lösbar verbunden, insbesondere verschraubt, werden. So weisen der Befestigungsabschnitt 19 und der andere Befestigungsabschnitt 20 jeweils ein Gewinde auf. Die weitere Ölleitung 35 ist in Figur 5 nicht dargestellt.

Ein weiterer Unterschied besteht darin, dass das Getriebe 2 keine Buchse aufweist. Dies bedeutet, dass die Anlauffläche 12 Bestandteil des Lagerzapfens 6 ist. Insbesondere entspricht die Anlauffläche 12 dem Teil des Lagerzapfens 6 der in Kontakt mit dem Lager 10 gebracht werden kann. Dabei weist der Lagerzapfen 6 den Abstützbereich 29 zum axialen Abstützen des ersten Zugmittelrads 3 auf, der ebenfalls die Anlauffläche 12 aufweist.

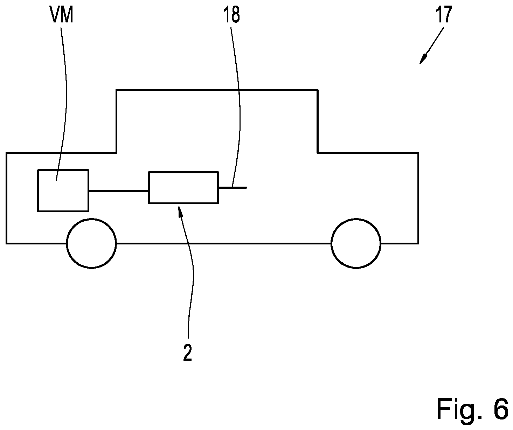

Figur 6 zeigt ein Kraftfahrzeug 17 mit dem erfindungsgemäßen Getriebe 2. Wie aus Figur 6 ersichtlich ist, ist das Getriebe 2 mit der Kraftfahrzeug-Antriebseinheit VM triebtechnisch verbunden. Das Getriebe 2 kann mittels der

Getriebeausgangswelle 18 mit anderen, in der Figur 6 nicht dargestellten Bauteilen des Kraftfahrzeugs 17, wie beispielsweise einem Achsdifferential, triebtechnisch verbunden sein.

### Bezugszeichen

- 1: Zugmitteltrieb
- 2: Getriebe
- 3: erstes Zugmittelrad
- 4: zweites Zugmittelrad
- 5: Zugmittel
- 6: Lagerzapfen
- 7: Getriebebauteil
- 8: elektrische Maschine
- 9: Getriebegehäuse
- 10: Lager
- 11: Buchse
- 12: Anlauffläche
- 13: Bund
- 14: weitere Bohrung
- 15: Ölleitung
- 16: Rotorwelle
- 17: Kraftfahrzeug
- 18: Getriebeausgangswelle
- 19: Befestigungsabschnitt
- 20: anderer Befestigungsabschnitt des Getriebegehäuses
- 21: andere Ölleitung
- 22: Bohrung
- 23: andere Bohrung
- 24: zusätzliche Bohrung
- 25: Verbindungsmittel
- 26: Koppelabschnitt
- 27: Hohlraum
- 28: Koppelstück
- 29: Getriebeeingangswelle
- 30: Ölleitelement
- 31: weiteres Ölleitelement
- 32: Abstützbereich
- 33: Vorsprung
- 34: Verkabelung
- 35: weitere Ölleitung
- 36: Wellenlager
- 37: Auslassöffnung

- M: Mittelachse
- HG: Hauptgetriebe
- VM: Kraftfahrzeugantriebseinheit

## Patentansprüche

1. Getriebe (2) für ein Kraftfahrzeug (17), mit einer elektrischen Maschine (8) und einem Zugmitteltrieb (1), das ein erstes Zugmittelrad (3), das mit einer Rotorwelle (16) der elektrischen Maschine (8) drehfest verbunden ist, ein zweites Zugmittelrad (4), das mit einem Getriebebauteil (7) drehfest verbindbar ist und das mittels eines Zugmittels (5) mit dem ersten Zugmittelrad (3) triebtechnisch verbunden ist, und einen Lagerzapfen (6) zum Abstützen des ersten Zugmittelrads (3) aufweist, wobei das erste Zugmittelrad (3) in radialer Richtung mittels eines Lagers (10) an dem Lagerzapfen (6) abgestützt ist, **dadurch gekennzeichnet, dass** sich eine Ölleitung (15) durch den Lagerzapfen (6) erstreckt, durch die Öl zu der elektrischen Maschine (8) zuführbar ist, wobei sich die Ölleitung (15) in dem Lagerzapfen (6) in axialer Richtung erstreckt.

2. Getriebe (2) nach Anspruch 1, **dadurch gekennzeichnet, dass** Öl aus einer in einem Getriebegehäuse (9) angeordneten weiteren Ölleitung (35) mittels der Ölleitung (15) zu der elektrischen Maschine (8) zuführbar ist.

3. Getriebe (2) nach Anspruch 1 oder 2, **dadurch gekennzeichnet, dass** die Rotorwelle (16)
a. koaxial zu dem Lagerzapfen (6) angeordnet ist und/oder
b. eine andere Ölleitung (21) aufweist, die mit der Ölleitung (15) fluidisch verbunden ist.

4. Getriebe (2) nach einem der Ansprüche 1 bis 3, **dadurch gekennzeichnet, dass** die Rotorwelle (16) zumindest eine Bohrung (22) und/oder zumindest eine andere Bohrung (23) aufweist, durch die Öl zu wenigstens einem Bauteil der elektrischen Maschine (8) zuführbar ist.

5. Getriebe (2) nach einem der Ansprüche 1 bis 4, **gekennzeichnet durch** zumindest eine weitere Bohrung (14), durch die Öl aus der Ölleitung (15) zu dem Lager (10) zuführbar ist.

6. Getriebe (2) nach einem der Ansprüche 1 bis 5, **gekennzeichnet durch** ein Ölleitelement (30), das derart angeordnet und ausgebildet ist, dass es das durch das Lager (10) geströmte Öl in Richtung zum Zugmittel (5) umlenkt.

7. Getriebe (2) nach Anspruch 5 oder 6, **dadurch gekennzeichnet, dass** das erste Zugmittelrad (3) zumindest eine zusätzliche Bohrung (24), durch die das durch die weitere Bohrung (14) geströmte Öl aus dem ersten Zugmittelrad (3) ausströmt, und ein weiteres Ölleitelement (31) aufweist, das das durch die zusätzliche Bohrung (24) geströmte Öl in Richtung zum Zugmittel (5) umlenkt.

8. Getriebe (2) nach einem der Ansprüche 1 bis 7, **dadurch gekennzeichnet, dass** das Getriebe (2) ein Verbindungsmittel (25) aufweist, das
a. mit dem Lagerzapfen (6) lösbar verbindbar ist und mittels dem der Lagerzapfen (6) mit einem Getriebegehäuse (9) form- und/oder kraftschlüssig verbindbar ist und/oder das
b. koaxial zu dem Lagerzapfen (6) und/oder der Rotorwelle (16) angeordnet ist und/oder das
c. zum Teil von dem Lagerzapfen (6) umschlossen ist.

9. Getriebe (2) nach Anspruch 8, **dadurch gekennzeichnet, dass**
a. sich ein Teil der Ölleitung (15) durch das Verbindungsmittel (25) hindurch erstreckt und/oder dass
b. das Verbindungsmittel (25) einen Teil der Ölleitung (15) begrenzt.

10. Getriebe (2) nach einem der Ansprüche 1 bis 9, **dadurch gekennzeichnet, dass** das erste Zugmittelrad (3) einen Koppelabschnitt (26) zum drehfesten Verbinden des ersten Zugmittelrads (3) mit der Rotorwelle (16) aufweist.

11. Getriebe (2) nach Anspruch 10, **dadurch gekennzeichnet, dass** der Koppelabschnitt (26) einen Hohlraum (27) umschließt und dass sich
a. der Lagerzapfen (6) in den Hohlraum (27) erstreckt oder dass sich
b. das Verbindungsmittel (25) in den Hohlraum (27) erstreckt oder dass sich
c. ein Koppelstück (28) in den Hohlraum (27) erstreckt, durch das sich ein anderer Teil der Ölleitung (15) erstreckt und/oder das einen anderen Teil der Ölleitung (15) begrenzt.

12. Getriebe (2) nach einem der Ansprüche 1 bis 11, **dadurch gekennzeichnet, dass** das Getriebebauteil (7) eine Welle aufweist, die mit dem zweiten Zugmittelrad (4) drehfest verbunden ist oder dass das Getriebebauteil (7) einen Kupplungsbestandteil einer Kupplung aufweist, der mit dem zweiten Zugmittelrad (4) drehfest verbunden ist.

13. Getriebe (2) nach einem der Ansprüche 1 bis 12, **dadurch gekennzeichnet, dass** die elektrische Maschine (8) und das Getriebebauteil (7) radial versetzt zueinander angeordnet sind.

14. Kraftfahrzeug mit einem Getriebe (2) nach einem der Ansprüche 1 bis 13.

## Claims

1. Transmission (2) for a motor vehicle (17), with an electric machine (8) and a traction mechanism drive (1) which has a first traction mechanism wheel (3) which is connected fixedly to a rotor shaft (16) of the electric machine (8) so as to rotate with it, a second traction mechanism wheel (4) which can be connected fixedly to a transmission component (7) so as to rotate with it and which is drive-connected to the first traction mechanism wheel (3) by means of a traction mechanism (5), and a bearing journal (6) for supporting the first traction mechanism wheel (3), the first traction mechanism wheel (3) being supported on the bearing journal (6) in the radial direction by means of a bearing (10), **characterized in that** an oil line (15) extends through the bearing journal (6), through which oil line (15) oil can be fed to the electric machine (8), the oil line (15) extending in the bearing journal (6) in the axial direction.

2. Transmission (2) according to Claim 1, **characterized in that** oil can be fed to the electric machine (8) by means of the oil line (15) from a further oil line (35) which is arranged in a transmission housing (9).

3. Transmission (2) according to Claim 1 or 2, **characterized in that** the rotor shaft (16)
a. is arranged coaxially with respect to the bearing journal (6), and/or
b. has another oil line (21) which is connected fluidically to the oil line (15).

4. Transmission (2) according to one of Claims 1 to 3, **characterized in that** the rotor shaft (16) has at least one bore (22) and/or at least one other bore (23), through which oil can be fed to at least one component of the electric machine (8).

5. Transmission (2) according to one of Claims 1 to 4, **characterized by** at least one further bore (14), through which oil can be fed to the bearing (10) from the oil line (15).

6. Transmission (2) according to one of Claims 1 to 5, **characterized by** an oil guiding element (30) which is arranged and configured in such a way that it deflects the oil which has flowed through the bearing (10) in the direction of the traction mechanism (5).

7. Transmission (2) according to Claim 5 or 6, **characterized in that** the first traction mechanism wheel (3) has at least one additional bore (24), through which the oil which has flowed through the further bore (14) flows out of the first traction mechanism wheel (3), and a further oil guiding element (31) which deflects the oil which has flowed through the additional bore (24) in the direction of the traction mechanism (5).

8. Transmission (2) according to one of Claims 1 to 7, **characterized in that** the transmission (2) has a connecting means (25) which
a. can be connected releasably to the bearing journal (6) and by means of which the bearing journal (6) can be connected to a transmission housing (9) in a positively locking and/or non-positive manner, and/or which
b. is arranged coaxially with respect to the bearing journal (6) and/or the rotor shaft (16), and/or which
c. is enclosed in part by the bearing journal (6).

9. Transmission (2) according to Claim 8, **characterized in that**
a. a part of the oil line (15) extends through the connecting means (25), and/or **in that**
b. the connecting means (25) delimits a part of the oil line (15).

10. Transmission (2) according to one of Claims 1 to 9, **characterized in that** the first traction mechanism wheel (3) has a coupling section (26) for connecting the first traction mechanism wheel (3) fixedly to the rotor shaft (16) so as to rotate with it.

11. Transmission (2) according to Claim 10, **characterized in that** the coupling section (26) encloses a cavity (27), and **in that**
a. the bearing journal (6) extends into the cavity (27), or **in that**
b. the connecting means (25) extends into the cavity (27), or **in that**
c. a coupling piece (28) extends into the cavity (27), through which coupling piece (28) another part of the oil line (15) extends and/or which delimits another part of the oil line (15).

12. Transmission (2) according to one of Claims 1 to 11, **characterized in that** the transmission component (7) has a shaft which is connected fixedly to the second traction mechanism wheel (4) so as to rotate with it, or **in that** the transmission component (7) has a clutch constituent part of a clutch, which clutch constituent part is connected fixedly to the second traction mechanism wheel (4) so as to rotate with it.

13. Transmission (2) according to one of Claims 1 to 12, **characterized in that** the electric machine (8) and the transmission component (7) are arranged offset radially with respect to one another.

14. Motor vehicle with a transmission (2) according to one of Claims 1 to 13.

## Revendications

1. Transmission (2) destinée à un véhicule automobile (17), ladite transmission comprenant une machine électrique (8) et un entraînement par moyen de traction (1) qui comporte une première roue de moyen de traction (3), qui est reliée solidairement en rotation à un arbre de rotor (16) de la machine électrique (8), et une deuxième roue de moyen de traction (4) qui peut être reliée solidairement en rotation à un composant de transmission (7) et qui est reliée en entraînement à la première roue de moyen de traction (3) à l'aide d'un moyen de traction (5), et un tourillon (6) destiné à supporter la première roue de moyen de traction (3), la première roue de moyen de traction (3) étant supportée dans la direction radiale à l'aide d'un palier (10) par le tourillon (6), **caractérisée en ce qu'**une conduite d'huile (15) s'étend à travers le tourillon (6), conduite d'huile à travers laquelle de l'huile peut être amenée à la machine électrique (8), la conduite d'huile (15) s'étendant dans le tourillon (6) dans la direction axiale.

2. Transmission (2) selon la revendication 1, **caractérisée en ce que** l'huile peut être amenée d'une autre conduite d'huile (35), disposée dans un boîtier de transmission (9), à la machine électrique (8) à l'aide de la conduite d'huile (15).

3. Transmission (2) selon la revendication 1 ou 2, **caractérisée en ce que** l'arbre de rotor (16)
a. est disposé coaxialement au tourillon (6) et/ou
b. comporte une autre conduite d'huile (21) qui est reliée fluidiquement à la conduite d'huile (15).

4. Transmission (2) selon l'une des revendications 1 à 3, **caractérisée en ce que** l'arbre de rotor (16) comporte au moins un alésage (22) et/ou au moins un autre alésage (23) par le biais desquels de l'huile peut être amenée à au moins un composant de la machine électrique (8).

5. Transmission (2) selon l'une des revendications 1 à 4, **caractérisée par** au moins un autre alésage (14) par le biais duquel de l'huile de la conduite d'huile (15) peut être amenée au palier (10).

6. Transmission (2) selon l'une des revendications 1 à 5, **caractérisée par** un élément de guidage d'huile (30) qui est disposé et conçu de manière à dévier l'huile circulant à travers le palier (10) en direction du moyen de traction (5).

7. Transmission (2) selon la revendication 5 ou 6, **caractérisée en ce que** la première roue de moyen de traction (3) comporte au moins un autre alésage (24), par lequel de l'huile circulant à travers l'autre alésage (14) sort de la première roue de moyen de traction (3), et un autre élément de guidage d'huile (31) qui dévie l'huile s'écoulant à travers l'autre alésage (24) en direction du moyen de traction (5).

8. Transmission (2) selon l'une des revendications 1 à 7, **caractérisée en ce que** la transmission (2) comporte un moyen de liaison (25), qui
a. peut être relié de manière amovible au tourillon (6) et à l'aide duquel le tourillon (6) peut être relié par engagement positif et/ou par engagement par force à un boîtier de transmission (9) et/ou qui
b. est disposé coaxialement à un tourillon (6) et/ou à l'arbre rotor (16) et/ou qui
c. est en partie entouré par le tourillon (6).

9. Transmission (2) selon la revendication 8, **caractérisée en ce que**
a. une partie de la conduite d'huile (15) s'étend à travers le moyen de liaison (25) et/ou **en ce que**
b. le moyen de liaison (25) délimite une partie de la conduite d'huile (15).

10. Transmission (2) selon l'une des revendications 1 à 9, **caractérisée en ce que** la première roue de moyen de traction (3) comporte une portion d'accouplement (26) destinée à relier solidairement en rotation la première roue de moyen de traction (3) à l'arbre de rotor (16).

11. Transmission (2) selon la revendication 10, **caractérisée en ce que** la portion d'accouplement (26) renferme une cavité (27) et **en ce que**
a. le tourillon (6) s'étend jusque dans la cavité (27) ou **en ce que**
b. le moyen de liaison (25) s'étend jusque dans la cavité (27) ou **en ce que**
c. une pièce d'accouplement (28) s'étend jusque dans la cavité (27) à travers laquelle s'étend une autre partie de la conduite d'huile (15) et/ou qui délimite une autre partie de la conduite d'huile (15).

12. Transmission (2) selon l'une des revendications 1 à 11, **caractérisée en ce que** le composant de transmission (7) comporte un arbre qui est relié solidairement en rotation à la deuxième roue de moyen de traction (4) ou **en ce que** le composant de transmission (7) comporte un élément constitutif d'un embrayage, lequel élément constitutif est relié solidairement en rotation à la deuxième roue de moyen de traction (4).

13. Transmission (2) selon l'une des revendications 1 à 12, **caractérisée en ce que** la machine électrique (8) et le composant de transmission (7) sont disposés en étant décalés radialement l'un de l'autre.

14. Véhicule automobile comprenant une transmission (2) selon l'une des revendications 1 à 13.
